# EUROPEAN PATENT APPLICATION

(11) **EP 4 789 928 A1**
(43) Date of publication of application: **12.08.2026**
(21) Application number: 26153943.1
(22) Date of filing: 23.01.2026
(51) Int. Cl.: B60R 25/30

(54) **VEHICLE RECORDING CONTROL APPARATUS AND CONTROL METHOD FOR VEHICLE RECORDING CONTROL APPARATUS**

(30) Priority: 07.02.2025 JP 2025018966
(71) Applicant: TOYOTA JIDOSHA KABUSHIKI KAISHA, Toyota-Shi, Aichi-Ken 471-8571 (JP)
(72) Inventor: ICHIKAWA, Yoji, TOYOTA-SHI, AICHI, 471-8571 (JP)
(74) Representative: Cabinet Beau de Loménie

(57) **Abstract**

A vehicle recording control apparatus that controls recording of surroundings of a vehicle by an in-vehicle external camera, the device comprising: an impact value detection unit configured to detect an impact value applied to the vehicle; a recording start unit configured to start recording the surroundings of the vehicle when the impact value becomes equal to or greater than a reference recording threshold value; and a door state detection unit configured to detect an open/closed state of a door of the vehicle, wherein the recording start unit cancels the recording of the surroundings of the vehicle even if the impact value becomes equal to or greater than the reference recording threshold value, when the door of the vehicle is in an open state, or until a preset set time elapses after the door transitions from the open state to a closed state.

## Description

### CROSS-REFERENCE TO RELATED APPLICATION

This application is based upon and claims the benefit of priority from Japanese Patent Application No. 2025-018966, filed on February 7, 2025, the entire contents of which are incorporated herein by reference, and to which the person of the art can refer when considering the present disclosure.

### TECHNICAL FIELD

The present disclosure relates to a vehicle recording control apparatus and a control method for the vehicle recording control apparatus.

### BACKGROUND

Conventionally, Japanese Unexamined Patent Application Publication No. 2022-047299 is known as a technical document related to a vehicle recording control apparatus. This publication discloses a drive recorder that disables notification of video recording when an impact such as door opening/closing that occurs before a user leaves the host vehicle is detected.

### SUMMARY

However, in the above-described related art, only the notification of video recording to the user is stopped, and the recording of the video is not stopped. For this reason, there has been a problem that unnecessary recording caused by the impact of the user's door opening/closing is started, and power and storage space are wasted.

One aspect of the present disclosure is a vehicle recording control apparatus that controls recording of the surroundings of a vehicle by an in-vehicle external camera. The vehicle recording control apparatus includes an impact value detection unit configured to detect an impact value applied to the vehicle, a recording start unit configured to start recording the surroundings of the vehicle when the impact value becomes equal to or greater than a reference recording threshold value, and a door state detection unit configured to detect an open/closed state of a door of the vehicle. The recording start unit cancels the recording of the surroundings of the vehicle even if the impact value becomes equal to or greater than the reference recording threshold value, when the door of the vehicle is in an open state, or until a preset set time elapses after the door transitions from the open state to a closed state.

According to the vehicle recording control apparatus according to one aspect of the present disclosure, since it is possible to control to cancel the recording even if the impact value is equal to or greater than the reference recording threshold value when the door of the vehicle is in the open state, or until the preset set time elapses after the door transitions from the open state to the closed state, it is possible to suppress unnecessary recording caused by the user's door opening/closing operation of the vehicle.

In the vehicle recording control apparatus according to one aspect of the present disclosure, the recording start unit may start recording the surroundings of the vehicle without cancellation when the impact value becomes equal to or greater than the reference recording threshold value even if the door of the vehicle is in the open state, after a preset recording restriction time has elapsed while the door remains in the open state.

In the vehicle recording control apparatus according to one aspect of the present disclosure, the recording start unit starts recording the surroundings of the vehicle without cancellation when the impact value becomes equal to or greater than a first recording threshold value even when the door is in the open state, and the first recording threshold value may be a threshold value larger than the reference recording threshold value.

In the vehicle recording control apparatus according to one aspect of the present disclosure, the recording start unit starts recording the surroundings of the vehicle without cancellation when the impact value becomes equal to or greater than a second recording threshold value even during the period until the set time elapses after the door transitions from the open state to the closed state, and the second recording threshold value may be a threshold value larger than the reference recording threshold value.

Another aspect of the present disclosure is a control method for a vehicle recording control apparatus that controls recording of the surroundings of a vehicle by an in-vehicle external camera. The control method for the vehicle recording control apparatus includes an impact value detection step of detecting an impact value applied to the vehicle, a recording start step of starting recording of the surroundings of the vehicle when the impact value becomes equal to or greater than a reference recording threshold value, and a door state detection step of detecting an open/closed state of a door of the vehicle. In the recording start step, the recording of the surroundings of the vehicle is canceled even if the impact value becomes equal to or greater than the reference recording threshold value, when the door of the vehicle is in an open state, or until a preset set time elapses after the door transitions from the open state to a closed state.

According to the control method for the vehicle recording control apparatus according to another aspect of the present disclosure, since it is possible to control to cancel the recording even if the impact value is equal to or greater than the reference recording threshold value when the door of the vehicle is in the open state, or until the preset set time elapses after the door transitions from the open state to the closed state, it is possible to suppress unnecessary recording caused by the user's door opening/closing operation of the vehicle.

According to each aspect of the present disclosure, it is possible to suppress unnecessary recording caused by the user's door opening/closing operation of the vehicle.

### BRIEF DESCRIPTION OF THE DRAWINGS

FIG. 1 is a block diagram showing a vehicle recording control apparatus according to an embodiment.
FIG. 2A is a graph showing an example of a time change of an impact value when a vehicle door is opened and closed.
FIG. 2B is a graph showing an example of a time change of a signal of a courtesy switch when the vehicle door is opened and closed.
FIG. 3 is a flowchart showing an example of recording start control of the vehicle recording control apparatus.
FIG. 4 is a flowchart showing an example of recording start control of a vehicle recording control apparatus in a modification.

### DETAILED DESCRIPTION

Hereinafter, embodiments of the present disclosure will be described with reference to the drawings.

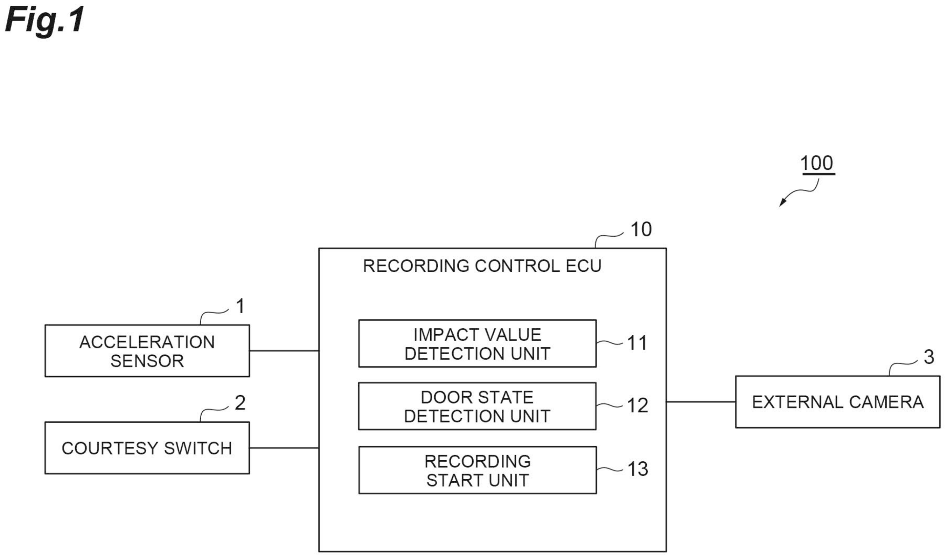

FIG. 1 is a block diagram showing a vehicle recording control apparatus 100 according to an embodiment. The vehicle recording control apparatus 100 shown in FIG. 1 controls an in-vehicle external camera that captures the surroundings of the vehicle, and automatically starts recording when an impact applied to the vehicle is equal to or greater than a certain level. The vehicle may be a passenger car or a cargo vehicle. The vehicle may be an autonomous driving vehicle or a vehicle subject to remote driving. The vehicle recording control apparatus 100 may be configured as a so-called drive recorder, or may be configured as an in-vehicle device including a drive recorder.

In addition, the vehicle recording control apparatus 100 determines the start of recording in consideration of the opening and closing of the vehicle door. As a result, the vehicle recording control apparatus 100 can avoid starting unnecessary recording caused by an impact when the user opens or closes the door.

As shown in FIG. 1, the vehicle recording control apparatus 100 is configured around a recording control ECU (Electronic Control Unit) 10. The recording control ECU 10 is an electronic control unit having a CPU (Central Processing Unit) and a storage unit. The storage unit is composed of, for example, a ROM (Read Only Memory), a RAM (Random Access Memory), an EEPROM (Electrically Erasable Programmable Read-Only Memory), and the like. In the recording control ECU 10, for example, various functions are realized by executing a program stored in the storage unit with the CPU. The recording control ECU 10 may be composed of a plurality of electronic units.

The recording control ECU 10 is connected to an acceleration sensor 1, a courtesy switch 2, and an external camera 3. The acceleration sensor 1 is a sensor that detects acceleration applied to the vehicle, and measures acceleration in three directions: front-rear, left-right, and up-down of the vehicle. By transmitting the detected physical quantity to the recording control ECU 10, it is possible to grasp the impact value when the vehicle is collided or subjected to sudden braking.

The courtesy switch 2 is a switch for detecting the open/closed state of the vehicle door. For example, it outputs a switch signal according to a change in the state of the door, such as turning on when the vehicle door is open and turning off when the door is closed. The recording control ECU 10 receives this signal and determines whether the door is in an open state or a closed state, or how much time has elapsed since it transitioned to the closed state. The courtesy switch 2 may be capable of detecting the open/closed state of not only a side door of the vehicle but also a back door or a trunk lid.

The external camera 3 is a camera installed to capture the surroundings of the vehicle, and is disposed at necessary positions such as front, rear, and left and right sides. The external camera 3 is configured to include at least a front camera that captures an image of the front of the vehicle. The external camera 3 may include a rear camera that captures an image of the rear of the vehicle, and may include a side camera that captures an image of the side of the vehicle. The external camera 3 may be a camera dedicated to a drive recorder.

Next, the functional configuration of the recording control ECU 10 will be described. As shown in FIG. 1, the recording control ECU 10 has an impact value detection unit 11, a door state detection unit 12, and a recording start unit 13.

The impact value detection unit 11 detects an impact value applied to the vehicle. The impact value detection unit 11 detects the impact value applied to the vehicle based on acceleration data received from the acceleration sensor 1, and determines whether or not the impact value is equal to or greater than a reference recording threshold value. The reference recording threshold value is a value that serves as a reference for the impact value applied to the vehicle, and is preset as a trigger for normal recording start. The value of the reference recording threshold value is set so as to exclude small vibrations and minor impacts assumed during normal driving, and to pick up only situations that should be recorded. Note that the impact value detection unit 11 may detect the impact value applied to the vehicle from detection data of a gyro sensor or other sensors, instead of the acceleration sensor 1.

The door state detection unit 12 detects the open/closed state of the vehicle door. The vehicle doors include vehicle doors (for example, side doors) for a user to get in and out. The vehicle doors may include a back door of the vehicle, and may include a trunk lid of the vehicle. The door state detection unit 12 detects whether the door is in an open state or a closed state based on a door open/close signal from the courtesy switch 2. The door state detection unit 12 also counts the elapsed time after the door transitions from the open state to the closed state. The door state detection unit 12 determines whether or not a preset set time has elapsed after the door transitions from the open state to the closed state.

The set time is a time set to avoid unnecessary recording from being started by an impact when closing a door. Depending on the structure of the vehicle body and the specifications of the sensor, the impact when closing the door is detected by the acceleration sensor 1 with a delay from the door close signal from the courtesy switch 2. The set time is not particularly limited as long as it can avoid unnecessary recording due to the impact when closing the door. The set time can be, for example, 1000 msec. The set time may be selected in a range such as 100 msec to 2000 msec. This is set based on upper and lower limit values that take into account the discrimination between an impact that typically occurs when opening and closing a door and a large impact. Depending on the structure of the vehicle, after the courtesy switch 2 detects that the door is closed, the impact when the user closes the door is detected as a change in acceleration by the acceleration sensor 1. For this reason, it is desirable to suppress the start of recording for a certain period of time after the door is closed.

Note that the sensor for the door state detection unit 12 to detect the open/closed state of the vehicle door is not limited to the courtesy switch 2. A known sensor configuration capable of detecting the open/closed state of the vehicle door can be adopted.

The recording start unit 13 determines the start of recording by the external camera 3 based on information from the impact value detection unit 11 and the door state detection unit 12. When the vehicle door is not being opened or closed, such as when the vehicle is traveling, the recording start unit 13 starts recording by the external camera 3 by sending a recording start instruction to the external camera 3 when the impact value applied to the vehicle becomes equal to or greater than the reference recording threshold value by the impact value detection unit 11.

The recording start unit 13 cancels the recording even if the impact value applied to the vehicle becomes equal to or greater than the reference recording threshold value, when the vehicle door is in an open state, or until the set time elapses after the vehicle door transitions from the open state to the closed state. The cancellation of recording includes a case where the recording itself is not started and a case where the recording is canceled after being started. Note that when the recording is canceled after being started, the recording start unit 13 deletes the recorded data during that time. This makes it possible to prevent unnecessary recording due to opening and closing of the door.

Note that the recording start unit 13 cancels the recording regardless of the state of other doors, if at least one of the plurality of doors of the vehicle is in an open state or is in a period until the set time elapses after transitioning from the open state to the closed state.

As a result, according to the vehicle recording control apparatus 100, since unnecessary recording due to door opening/closing can be prevented, it becomes possible to set the reference recording threshold value, which is a determination threshold for starting recording for an impact from outside the vehicle other than door opening/closing, slightly lower than in the related art. As a result, the vehicle recording control apparatus 100 can start recording and record the situation where the vehicle surface is scratched, even in a case where a shopping cart hits the vehicle and scratches the vehicle surface while the vehicle is parked.

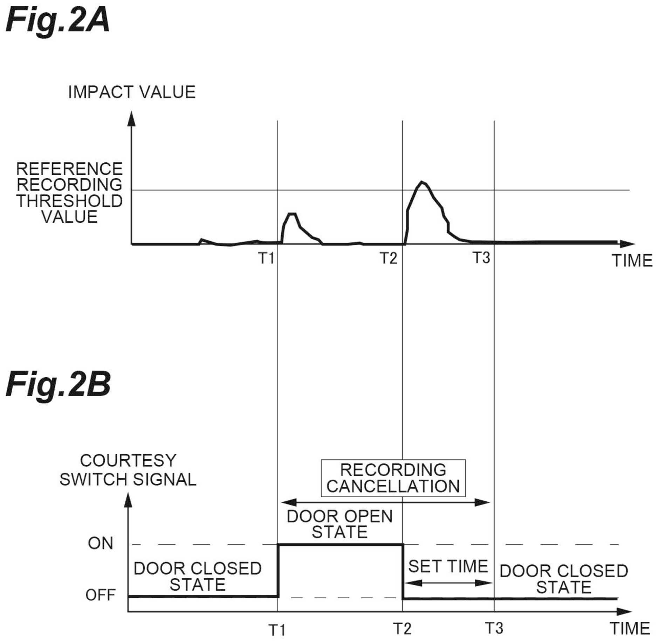

Here, FIG. 2A is a graph showing an example of a time change of an impact value when a vehicle door is opened and closed. In FIG. 2A, the vertical axis indicates the impact value, and the horizontal axis indicates time. The reference recording threshold value is indicated by a horizontal line, and recording is started when an impact exceeding the reference recording threshold value occurs while the vehicle is traveling. FIG. 2B is a graph showing an example of a time change of a signal of a courtesy switch when the vehicle door is opened and closed. In FIG. 2B, the vertical axis indicates the courtesy switch signal, and the horizontal axis indicates time. When the courtesy switch signal is ON, it indicates that the door is in an open state, and when it is OFF, it indicates that the door is in a closed state.

FIGS. 2A and 2B show a time T1 when the vehicle door becomes open, a time T2 when the vehicle door becomes closed, and a time T3 when the set time has elapsed from the time T2. As shown in FIGS. 2A and 2B, when the vehicle door becomes open at time T1, the impact value is detected as a small mountain-shaped graph. There is a time difference between when the door becomes open and when the impact is detected by the acceleration sensor 1. In FIG. 2A, the maximum value of the impact when the door becomes open is less than the reference recording threshold value.

Thereafter, when the vehicle door becomes closed at time T2, the impact value is detected as a large mountain-shaped graph. There is a time difference between when the door becomes closed and when the impact is detected by the acceleration sensor 1. In FIG. 2A, the maximum value of the impact when the door becomes closed is equal to or greater than the reference recording threshold value.

In the situation shown in FIGS. 2A and 2B, in a conventional device, unnecessary recording was started by the impact when the door became closed. In contrast, in the vehicle recording control apparatus 100, since the recording is canceled from time T1 when the door becomes open until time T3 when the set time elapses, it is possible to prevent unnecessary recording due to opening and closing of the door.

Note that when the vehicle is equipped with an electric slide door, the vehicle recording control apparatus 100 may exclude the electric slide door from the target of door opening/closing detection and the target of recording start determination. It is considered that the impact applied to the vehicle during opening and closing of the electric slide door is sufficiently attenuated by the control of an electric actuator. This eliminates the need for the recording control ECU 10 to perform unnecessary processing. In addition to the electric slide door, doors whose impact applied to the vehicle during opening and closing is sufficiently attenuated by hydraulic or other control may also be excluded.

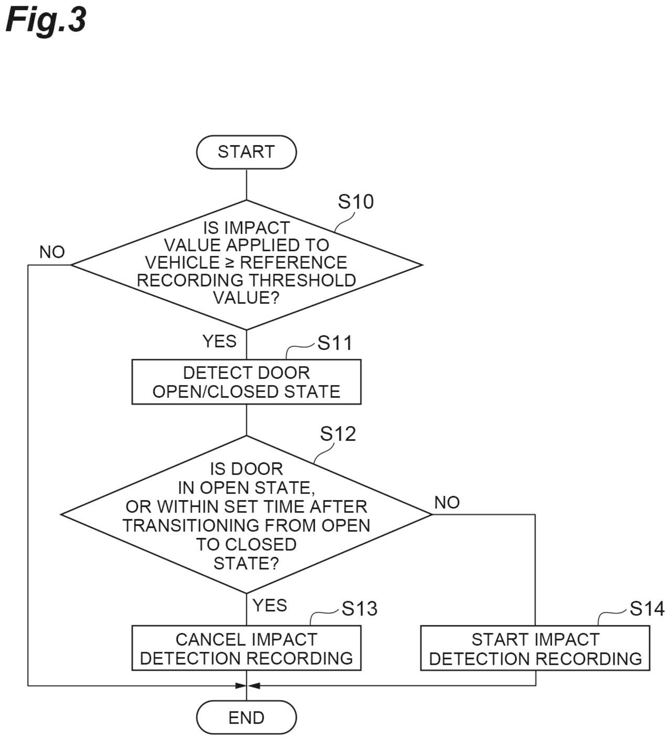

Next, a control method of the vehicle recording control apparatus 100 according to the present embodiment will be described with reference to the drawings. FIG. 3 is a flowchart showing an example of recording start control of the vehicle recording control apparatus 100.

As shown in FIG. 3, the recording control ECU 10 of the vehicle recording control apparatus 100 first determines in step S10 whether or not an impact value applied to the vehicle is equal to or greater than a reference recording threshold value (impact value detection step). The impact value detection unit 11 calculates the impact value using information acquired from the acceleration sensor 1. The impact value detection unit 11 performs the above determination by comparing the calculated impact value with the reference recording threshold value. When the impact value is less than the reference recording threshold value (step S10: NO), the recording control ECU 10 does not start recording and repeats the same determination. When the impact value is equal to or greater than the reference recording threshold value (step S10: YES), the recording control ECU 10 proceeds to step S11.

In step S11, the recording control ECU 10 detects the open/closed state of the door by the door state detection unit 12 (door state detection step). The door state detection unit 12 detects whether the vehicle door is in an open state or a closed state based on a signal from the courtesy switch 2. Thereafter, the recording control ECU 10 proceeds to step S12.

In step S12, the recording control ECU 10 determines by the door state detection unit 12 whether the vehicle door is in an open state or is in a period until the set time elapses after the door transitions from the open state to the closed state. This is determined for each door of the vehicle. Specifically, when the door is in the open state, or when the set time has not elapsed after the door transitioned from the open state to the closed state (step S12: YES), the recording control ECU 10 proceeds to step S13. When the set time has elapsed after the door transitioned from the open state to the closed state, or when the vehicle door has not been opened even once since the vehicle ignition was turned on (step S12: NO), the recording control ECU 10 proceeds to step S14.

In step S13, the recording control ECU 10 cancels the recording by impact detection and ends the process. On the other hand, in step S14, the recording control ECU 10 starts recording the surroundings of the vehicle by sending a recording start instruction to the external camera 3 by the recording start unit 13 (recording start step).

According to the vehicle recording control apparatus 100 and the control method thereof according to the present embodiment described above, since it is possible to control to cancel the recording even if the impact value is equal to or greater than the reference recording threshold value when the door of the vehicle is in the open state, or until the preset set time elapses after the door transitions from the open state to the closed state, it is possible to suppress unnecessary recording caused by the user's door opening/closing operation of the vehicle. Note that an aspect may be adopted in which recording is started in the case of YES in step S10, and cancellation of recording and deletion of recorded data are performed in step S13.

Next, a vehicle recording control apparatus 100 according to a modification will be described. In the vehicle recording control apparatus 100 according to the modification, even when the vehicle door is in an open state, after a preset recording restriction time has elapsed, recording of the surroundings of the vehicle is started when the impact value applied to the vehicle becomes equal to or greater than the reference recording threshold value.

Specifically, in the vehicle recording control apparatus 100 according to the modification, the door state detection unit 12 determines whether or not a recording restriction time has elapsed since the vehicle door became open. The recording restriction time is a time set to avoid unnecessary recording from being started by an impact when the door becomes open or an impact when the user gets out of the vehicle with the door open. The recording restriction time may be one minute or two minutes. The recording restriction time is not particularly limited.

Even when the vehicle door is in an open state, the recording start unit 13 starts recording the surroundings of the vehicle when the impact value applied to the vehicle becomes equal to or greater than the reference recording threshold value after the recording restriction time has elapsed while the door remains in the open state. It can be considered that the longer the time elapses after the door becomes open, such as when a user is loading or unloading luggage into or from the vehicle, the higher the probability that a situation that should be recorded, such as an object coming into contact from the outside, will occur, regardless of the opening and closing of the door. For this reason, the vehicle recording control apparatus 100 according to the modification starts recording the surroundings of the vehicle when the impact value becomes equal to or greater than the reference recording threshold value after the recording restriction time has elapsed while the door remains in the open state, thereby making it possible to appropriately start recording when the recording restriction time has elapsed while the door remains in the open state, while suppressing unnecessary recording when the door is opened.

In addition, in the vehicle recording control apparatus 100 according to the modification, even when the vehicle door is in an open state, recording of the surroundings of the vehicle is started when the impact value applied to the vehicle is equal to or greater than a first recording threshold value preset as a threshold value larger than the reference recording threshold value.

The first recording threshold value is a threshold value preset to determine a large impact that should trigger recording even when the door is in an open state. The first recording threshold value is set as a threshold value with a value larger than the reference recording threshold value. The first recording threshold value can be a value sufficiently larger than the impact value generated when the user opens the door or the impact value generated when the user gets out of the vehicle.

Specifically, even when the vehicle door is in an open state, when the impact value applied to the vehicle is equal to or greater than the first recording threshold value, the recording start unit 13 sends a recording start instruction to the external camera 3. As a result, the vehicle recording control apparatus 100 according to the modification can appropriately start recording when a large impact that should be recorded is applied to the vehicle, while suppressing unnecessary recording caused by the impact when the door is opened.

Furthermore, in the vehicle recording control apparatus 100 according to the modification, even during the period until the set time elapses after the door transitions from the open state to the closed state, recording of the surroundings of the vehicle is started when the impact value applied to the vehicle is equal to or greater than a second recording threshold value preset as a threshold value larger than the reference recording threshold value.

The second recording threshold value is a threshold value preset to determine a large impact that should trigger recording even during the period until the set time elapses after the door transitions from the open state to the closed state. The second recording threshold value is set as a threshold value with a value larger than the reference recording threshold value. The second recording threshold value can be a value sufficiently larger than the impact value generated when the user closes the door. The first recording threshold value and the second recording threshold value may be the same value or different values. The second recording threshold value can be a value larger than the first recording threshold value.

Specifically, even during the period until the set time elapses after the door transitions from the open state to the closed state, when the impact value applied to the vehicle is equal to or greater than the second recording threshold value, the recording start unit 13 sends a recording start instruction to the external camera 3. As a result, the vehicle recording control apparatus 100 according to the modification can appropriately start recording when a large impact that should be recorded is applied to the vehicle, while suppressing unnecessary recording caused by the impact when closing the door.

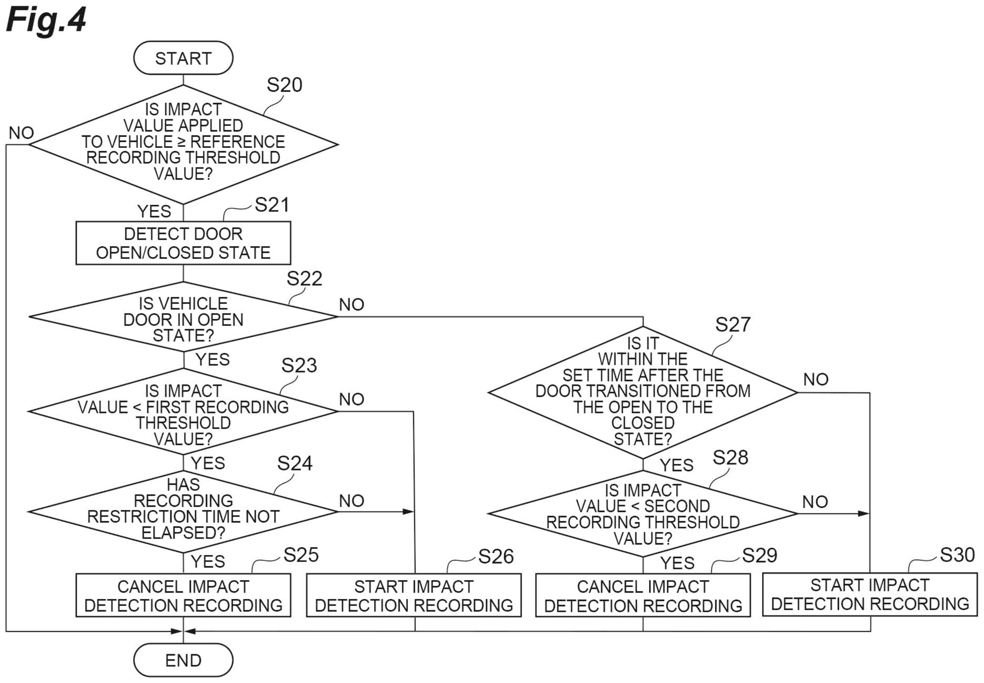

Next, a control method of the vehicle recording control apparatus 100 according to the modification will be described with reference to FIG. 4. FIG. 4 is a flowchart showing an example of recording start control of the vehicle recording control apparatus in the modification.

As shown in FIG. 4, the recording control ECU 10 of the vehicle recording control apparatus 100 according to the modification first determines in step S20 whether or not an impact value applied to the vehicle by the impact value detection unit 11 is equal to or greater than a reference recording threshold value (impact value detection step). When the impact value applied to the vehicle is not equal to or greater than the reference recording threshold value (step S20: NO), the recording control ECU 10 does not start recording and repeats the determination. When the impact value applied to the vehicle is equal to or greater than the reference recording threshold value (step S20: YES), the recording control ECU 10 proceeds to step S21.

In step S21, the recording control ECU 10 detects the open/closed state of the door by the door state detection unit 12 (door state detection step). The door state detection unit 12 determines whether the vehicle door is in an open state or a closed state based on a signal from the courtesy switch 2. Thereafter, the recording control ECU 10 proceeds to step S22.

In step S22, the recording control ECU 10 determines whether the vehicle door is in an open state by the door state detection unit 12. When the door is not in an open state (step S22: NO), the recording control ECU 10 proceeds to step S27. When the door is in an open state (step S22: YES), the recording control ECU 10 proceeds to step S23.

In step S23, the recording control ECU 10 determines whether the impact value detected by the impact value detection unit 11 is less than the first recording threshold value. When the impact value is not less than the first recording threshold value (step S23: NO), the recording control ECU 10 proceeds to step S26. When the impact value is less than the first recording threshold value (step S23: YES), the recording control ECU 10 proceeds to step S24.

In step S24, the recording control ECU 10 determines by the door state detection unit 12 whether the recording restriction time has elapsed while the door remains in the open state. When the recording restriction time has not elapsed while the door remains in the open state (step S24: YES), the recording control ECU 10 proceeds to step S25. When the recording restriction time has elapsed while the door remains in the open state (step S24: NO), the recording control ECU 10 proceeds to step S26.

In step S25, the recording control ECU 10 cancels the recording by impact detection and ends the process. On the other hand, in step S26, the recording control ECU 10 starts recording the surroundings of the vehicle by sending a recording start instruction to the external camera 3 by the recording start unit 13 (recording start step). Thereafter, the recording control ECU 10 ends the current process.

On the other hand, in step S27, the recording control ECU 10 determines by the door state detection unit 12 whether it is during the period until the set time elapses after the door transitioned from the open state to the closed state. When the set time has not elapsed after the door transitioned from the open state to the closed state (step S27: YES), the recording control ECU 10 proceeds to step S28. When the set time has elapsed after the door transitioned from the open state to the closed state (step S27: NO), the recording control ECU 10 proceeds to step S30.

In step S28, the recording control ECU 10 determines whether the impact value detected by the impact value detection unit 11 is less than the second recording threshold value. When the impact value is less than the second recording threshold value (step S28: YES), the recording control ECU 10 proceeds to step S29. When the impact value is not less than the second recording threshold value (step S28: NO), the recording control ECU 10 proceeds to step S30.

In step S29, the recording control ECU 10 cancels the recording by impact detection and ends the process. On the other hand, in step S30, the recording control ECU 10 starts recording the surroundings of the vehicle by sending a recording start instruction to the external camera 3 by the recording start unit 13 (recording start step). Thereafter, the recording control ECU 10 ends the current process.

According to the vehicle recording control apparatus 100 and the control method thereof according to the modification described above, similarly to the above-described embodiment, since it is possible to control to cancel the recording even if the impact value is equal to or greater than the reference recording threshold value when the door of the vehicle is in the open state, or until the set time elapses after the door transitions from the open state to the closed state, it is possible to suppress unnecessary recording caused by the user's door opening/closing operation of the vehicle.

In addition, according to the vehicle recording control apparatus 100 of the modification, even if the door is in an open state for a long time, since recording can be started when an impact equal to or greater than the reference recording threshold value is detected after a preset recording restriction time has elapsed, it becomes possible to record an event that should be recorded, such as when an impact equal to or greater than the reference recording threshold value is applied to the vehicle, while suppressing unnecessary recording.

Furthermore, according to the vehicle recording control apparatus 100 of the modification, since recording is started when an impact large enough for the impact value to be equal to or greater than the first recording threshold value is detected even if the door is in an open state, it is possible to appropriately record a situation that should be recorded, such as when a large impact is applied to the vehicle, while suppressing unnecessary recording.

In addition, according to the vehicle recording control apparatus 100 of the modification, since recording can be started when the impact value reaches a large value equal to or greater than the second recording threshold value even immediately after the door is closed, it is possible to appropriately record a situation that should be recorded, such as when a large impact is applied to the vehicle, while suppressing unnecessary recording caused by door opening/closing.

Although the embodiments of the present disclosure have been described above, the present disclosure is not limited to the above-described embodiments. The present disclosure can be implemented in various forms with various changes and improvements based on the knowledge of those skilled in the art, including the above-described embodiments.

The vehicle recording control apparatus 100 according to the present embodiment may be in an aspect that performs the door state detection step before the impact value detection step. The vehicle recording control apparatus 100 may be in an aspect that does not perform impact value detection when the door is in an open state, or until the set time elapses after the door transitions from the open state to the closed state.

Also in the vehicle recording control apparatus 100 according to the modification, an aspect may be adopted in which the door state detection step is performed before the impact value detection step. An aspect may be adopted in which the impact value is compared with the first recording threshold value or the second recording threshold value based on the state of the door.

The vehicle recording control apparatus 100 according to the modification does not necessarily need to start recording when the impact value becomes equal to or greater than the reference recording threshold value even if the vehicle door is in an open state, when the recording restriction time has elapsed while the door remains open. The determination of the recording restriction time is not essential.

The vehicle recording control apparatus 100 according to the modification does not necessarily need to compare the impact value with the first recording threshold value when the door is in an open state. Similarly, the vehicle recording control apparatus 100 according to the modification does not necessarily need to compare the impact value with the second recording threshold value during the period from when the door becomes closed until the set time elapses.

Different values may be set for the set time when the user gets on and gets off the vehicle. The set time when getting on can be a shorter time compared to the set time when getting off. In addition, since the door is closed while sitting in the vehicle when getting on, it is considered that the impact when closing the door is smaller than when getting off. For this reason, the second recording threshold value when getting on may be a smaller value than the second recording threshold value when getting off. Whether the user is getting into the vehicle or getting out of the vehicle can be determined from the timing of the vehicle's engine OFF and the length of the parking time. The determination may be made using a seat pressure sensor or a seat belt sensor.

## Claims

1. A vehicle recording control apparatus (100) configured to control recording of surroundings of a vehicle by an in-vehicle external camera (3), comprising:
an impact value detection unit (11) configured to detect an impact value applied to the vehicle;
a recording start unit (13) configured to start recording the surroundings of the vehicle when the impact value becomes equal to or greater than a reference recording threshold value; and
a door state detection unit (12) configured to detect an open/closed state of a door of the vehicle,
wherein the recording start unit (13) is configured to cancel the recording of the surroundings of the vehicle even if the impact value becomes equal to or greater than the reference recording threshold value, when the door of the vehicle is in an open state, or until a preset set time elapses after the door transitions from the open state to a closed state.

2. The vehicle recording control apparatus (100) according to claim 1, wherein the recording start unit (13) is configured to start recording the surroundings of the vehicle without cancellation when the impact value becomes equal to or greater than the reference recording threshold value even if the door of the vehicle is in the open state, after a preset recording restriction time has elapsed while the door remains in the open state.

3. The vehicle recording control apparatus (100) according to claim 1 or 2, wherein the recording start unit (13) is configured to start recording the surroundings of the vehicle without cancellation when the impact value becomes equal to or greater than a first recording threshold value even when the door is in the open state, and
the first recording threshold value is a threshold value larger than the reference recording threshold value.

4. The vehicle recording control apparatus (100) according to any one of claims 1 to 3, wherein the recording start unit (13) is configured to start recording the surroundings of the vehicle without cancellation when the impact value becomes equal to or greater than a second recording threshold value even during the period until the set time elapses after the door transitions from the open state to the closed state, and
the second recording threshold value is a threshold value larger than the reference recording threshold value.

5. A control method for a vehicle recording control apparatus (100) that is configured to control recording of surroundings of a vehicle by an in-vehicle external camera (3), the method comprising:
an impact value detection step of detecting an impact value applied to the vehicle;
a recording start step of starting recording of the surroundings of the vehicle when the impact value becomes equal to or greater than a reference recording threshold value; and
a door state detection step of detecting an open/closed state of a door of the vehicle,
wherein in the recording start step, the recording of the surroundings of the vehicle is canceled even if the impact value becomes equal to or greater than the reference recording threshold value, when the door of the vehicle is in an open state, or until a preset set time elapses after the door transitions from the open state to a closed state.
